# EUROPÄISCHE PATENTSCHRIFT

(11) **EP 1 462 004 B1**
(45) Veröffentlichungstag und Bekanntmachung des Hinweises auf die Patenterteilung: **28.09.2005**
(21) Anmeldenummer: 04101137.0
(22) Anmeldetag: 19.03.2004
(51) Int. Cl.: A21D 2/02

(54) **Verwendung von Backtreibmitteln oder Bestandteilen hiervon zur Herstellung von Dauerbackwaren**
Use of chemical leavening agents or components thereof for the production of bakery products with long shelf life
Utilisation de levure chimique ou de ses composants pour la préparation de produits cuits avec une conservation longue

(30) Priorität: 29.03.2003 DE 10314235
(43) Veröffentlichungstag der Anmeldung: 29.09.2004
(73) Patentinhaber: Chemische Fabrik Budenheim KG, 55257 Budenheim (DE)
(72) Erfinder: BOUCHAIN, Wolfgang, 65207, Wiesbaden (DE)
(74) Vertreter: Weber, Dieter

(56) Entgegenhaltungen:
- BECALSKI A ET AL: "Acrylamide in foods: occurence, source and modeling" JOURNAL OF AGRICULTURAL AND FOOD CHEMISTRY, AMERICAN CHEMICAL SOCIETY. WASHINGTON, US, Bd. 51, 18. Dezember 2002 (2002-12-18), Seiten 802-808, XP002237520 ISSN: 0021-8561
- DATABASE BIOSIS [Online] BIOSCIENCES INFORMATION SERVICE, PHILADELPHIA, PA, US; 2003, BIEDERMANN MAURUS ET AL: "Model studies on acrylamide formation in potato, wheat flour and corn starch; ways to reduce acrylamide contents in bakery ware." XP002287443 Database accession no. PREV200400134761 & MITTEILUNGEN AUS LEBENSMITTELUNTERSUCHUNG UND HYGIENE, Bd. 94, Nr. 5, 2003, Seiten 406-422, ISSN: 1424-1307
- DATABASE MEDLINE [Online] US NATIONAL LIBRARY OF MEDICINE (NLM), BETHESDA, MD, US; 30. Juni 2004 (2004-06-30), AMREIN THOMAS M ET AL: "Acrylamide in gingerbread: critical factors for formation and possible ways for reduction." XP002287444 Database accession no. NLM15212481 & JOURNAL OF AGRICULTURAL AND FOOD CHEMISTRY. 30 JUN 2004, Bd. 52, Nr. 13, 30. Juni 2004 (2004-06-30), Seiten 4282-4288, ISSN: 0021-8561

## Beschreibung

Bei der Herstellung Feiner Backwaren werden in großem Umfang Backtriebmittel verwendet, die die Struktur der Backwaren auflockern. Sie können aus einem Säureträger und einem Kohlendioxidträger bestehen, die bei Vereinigung miteinander CO₂ freisetzen, welches die Auflokkerung der Backwarenstruktur bewirkt. Die Backtriebmittel können aber auch Verbindungen sein, die sich beim Erhitzen während des Backvorganges unter Bildung von Kohlendioxid zersetzen. Solche Backtriebmittel sind gewöhnlich Alkali- oder Ammoniumcarbonate, -hydrogencarbonate oder -carbamate. Die üblichsten Triebmittel dieser Gruppe sind die Natrium- und Ammoniumverbindungen. Gemische von Ammoniumcarbonat, Ammoniumhydrogencarbonat und Ammoniumcarbamat sind unter der Bezeichnung "Hirschhornsalz" im Handel. Ammoniumhydrogencarbonat wird als "ABC-Trieb" bezeichnet und üblicherweise zur Herstellung von Dauerbackwaren verwendet, die scharf ausgebacken werden, wobei das entstehende Ammoniak entweicht.

In neuerer Zeit wurde erkannt, daß sich in bestimmten Lebensmitteln, die bei der Herstellung oder Zubereitung scharfen Bedingungen, wie hohen Temperaturen und/oder langen Erhitzungszeiten, ausgesetzt werden und Kohlenhydrate sowie bestimmte Proteine oder Aminosäuren enthalten und geringe Wassergehalte haben, Acrylamid bildet, welches sich in Tierversuchen als krebserregende und erbgutverändernde Substanz erwies. Der Entstehungsmechanismus von Acrylamid in Lebensmitteln ist bislang nicht geklärt. Es wurden aber in bestimmten Nahrungsmitteln teils erhebliche Mengen gefunden, wie beispielsweise in Kartoffelchips und bestimmten Dauerbackwaren.

Da bislang weder der Entstehungsmechanismus für das Acrylamid in Nahrungsmitteln noch der Wirkungsmechanismus geklärt sind, empfiehlt die Fachwelt die Meidung bestimmter Nahrungsmittel oder eine andere Herstellungsweise mit milderen Verfahrensbedingungen. Letztere führen aber gewöhnlich nicht zu geschmacklicher und struktureller Äquivalenz mit den gewohnten Produkten.

Der Verbraucher ist somit nicht geneigt, Produkte zu meiden, deren Genuß er seit langer Zeit gewohnt ist, wie beispielsweise Kartoffelchips oder Dauerbackwaren, die für ihre Konsistenz bestimmte scharfe Bedingungen, wie hohe Temperaturen und/oder lange Backzeiten, erfordern. Solche Dauerbackwaren sind beispielsweise Lebkuchen, Kekse, Plätzchen, Cracker, Mürbeteiggebäck und andere.

Becalski, A. et al (1999). Acrylamide in foods: occurence, source and modeling. JOURNAL OF AGRICULTURAL AND FOOD CHEMISTRY, AMERICAN CHEMICAL SOCIETY. WASHINGTON, US, vol. 51, p. 802-808 offenbart, dass Asparagine der wichtigste Prekursor von Acrylamide ist.

Die der Erfindung zugrundeliegende Aufgabe bestand nun darin, den bei solchen Dauerbackwaren auftretenden Acrylamidgehalt vollständig oder zumindest wesentlich zu reduzieren, ohne die Backbedingungen und die sonstigen Inhaltsstoffe so zu verändern, dass die Produkte nicht mehr die gewohnte Konsistenz erhalten. Erfindungsgemäß wird diese Aufgabe gelöst, indem man wenigstens ein von Ammoniumionen im wesentlichen freies Backtriebmittel oder einen von Ammoniumionen im wesentlichen freien Bestandteil eines solchen Backtriebmittels zur Verminderung der Acrylamidkonzentration in Dauerbackwaren gegenüber den Acrylamidkonzentrationen von Dauerbackwaren, die unter den gleichen Bedingungen, aus den gleichen Ausgangsstoffen, aber mit Ammoniumverbindungen als Backtriebmittel erhalten wurden, verwendet. Damit kann man also lediglich unter Austausch des Backtriebmittels oder eines Bestandteils desselben alle übrigen üblichen Backbedingungen und Rezepturen beibehalten, so dass man Dauerbackwaren der gewünschten Klasse erhält, deren Geschmack und Konsistenz sich nicht von denen traditionell hergestellter Produkte unterscheiden.

Dies bedeutet aber auch, dass man anstelle des für solche Dauerbackwaren üblicherweise verwendeten ABC-Triebs andere Backtriebmittel verwenden muß. Es ist überraschend, dass man durch Austausch der Ammoniumionen enthaltenden Carbonate, Bicarbonate und Carbamate gegen ammoniumfreie Backtriebmittel den Gehalt an Acrylamid auf minimale Werte reduzieren kann, ohne die übrigen Verfahrensparameter und Rezepturen gegenüber dem Stand der Technik zu verändern. So kann man Lebkuchen, Kekse und Plätzchen praktisch ohne oder mit geringem Acrylamidgehalt sowie üblicher Struktur und üblichem Geschmack auch unter sonst üblichen Bedingungen herstellen.

Wenn hier von scharf auszubackenden oder ausgebackenen Dauerbackwaren die Rede ist, so sind diese solche, die bei relativ hohen Temperaturen über 120°C und/oder relativ langer Backdauer hergestellt werden und relativ geringe Wassergehalte besitzen. Bekanntermaßen sind solche Dauerbackwaren vor allem Lebkuchen, Kekse und Plätzchen. Für deren Herstellung wird daher bevorzugt der Erfindungsgedanke angewendet. Ein besonders überraschend hoher Effekt ergibt sich dabei für Lebkuchen. Bezüglich der Definition wird auf Alfred Hagenmeyer, Lebensmittelrecht, Band 11, Stand: 15. Oktober 2002, Verlag C. H. Beck München, Seiten 13 bis 18 hingewiesen.

Die erfindungsgemäß verwendeten Triebmittelsysteme bestehen aus Säureträgem und Kohlendioxidträgem, die beide im wesentlichen ammoniumionenfrei gehalten werden. Zu den Kohlendioxidträgem gehört die Klasse der ammoniumfreien Alkalicarbonate und Alkalihydrogencarbonate. Die Säureträger können beispielsweise modifizierte saure Natriumpyrophosphate und/oder saure Natriumaluminiumphosphate und/oder Dicalciumphosphat-dihydrat sein.

Weiterhin ist es vorteilhaft, wenn man einen an sich bekannten Säureträger mit verzögerter CO₂-Freisetzung verwendet, um zu gewährleisten, daß sich der Kohlendioxidträger allenfalls in geringem Umfang vorzeitig, d. h. vor dem Backvorgang, unter Abgabe von Kohlendioxid zersetzt. Beispielsweise in der DE-OS 3 725 707 werden zur Stabilisierung von Alkalimetalldihydrogendiphosphaten Magnesiumoxid und/oder Magnesiumhydroxid verwendet.

Die folgenden Beispiele und Vergleichsbeispiele zeigen den überraschenden Effekt des Anmeldungsgegenstandes im Vergleich mit Bezugsproben, die unter Verwendung von Ammoniumhydrogencarbonat hergestellt wurden. Die verwendete Oberhitze lag bei 220 °C, und die Unterhitze lag bei 200 °C.

Die Rezepturen waren folgende:

### Beispiele 1, 2 und Vergleichsbeispiel 1

| **Rezeptur für Lebkuchen** | | | |
|---|---|---|---|
| **Rohstoffe** | | **Beispiel 1 (Erfindung)** | **Beispiel 2 (Erfindung)** |
| | | **Zugabe (g)** | |
| Weizenmehl (550) | | 900 | 900 |
| Roggenmehl (997) | | 600 | 600 |
| Bienenhonig | | 788 | 788 |
| Glucosesirup | | 190 | 190 |
| Kristallzucker | | 488 | 488 |
| Wasser | | 146 | 146 |
| | | | |
| Vorteig | | 1500 | 1500 |
| Lebkuchengewürz | | 25 | 25 |
| Kaliumcarbonat | | 6 | 6 |
| Ammoniumhydrogencarbonat | | | |
| Natriumhydrogencarbonat | | 9 | 9 |
| Dicalciumphosphat-dihydrat | | 14,4 | |
| Saures Natriumpyrophosphat (verzögert) | | 5,4 | |
| Natriumaluminiumphosphat | | | 9 |
| Wasser | | 120 | 120 |
| | | | |

| **Backbedingungen** | **Temperatur (°C)** | | |
|---|---|---|---|
| Oberhitze | 220 | | |
| Unterhitze | 200 | | |
| | | | |
| Acrylamidgehalt | | 120 µg/kg | 40 µg/kg |

### Beispiel 3 und Vergleichsbeispiel 2

| **Rezeptur für Lebkuchen** | | | |
|---|---|---|---|
| **Rohstoffe** | | **Vgl. Bsp.** | **Beispiel 3 (Erfindung)** |
| | | **Zugabe (g)** | |
| Weizenmehl (550) | | 900 | 900 |
| Roggenmehl (997) | | 600 | 600 |
| Bienenhonig | | 788 | 788 |
| Glucosesirup | | 190 | 190 |
| Kristallzucker | | 488 | 488 |
| Wasser | | 146 | 146 |
| | | | |
| Vorteig | | 1500 | 1500 |
| Lebkuchengewürz | | 25 | 25 |
| Kaliumcarbonat | | 6 | 6 |
| Ammoniumhydrogencarbonat | | 9 | |
| Saures Natriumpyrophosphat | | | 12,6 |
| Natriumhydrogencarbonat | | | 9 |
| Wasser | | 120 | 120 |
| | | | |

| **Backbedingungen** | **Temperatur (°C)** | | |
|---|---|---|---|
| Oberhitze | 220 | | |
| Unterhitze | 200 | | |
| | | | |
| Acrylamidgehalt | | 2740 µg/kg | 135 µg/kg |

Aus den Beispielen und dem Vergleichsbeispiel ist ersichtlich, dass der Austausch des Ammoni-umionen enthaltenden Backtriebmittels gegen ein solches ohne Ammoniumionen zu erheblich geringerem Acrylamidgehalt führt, was insbesondere bei Lebkuchen ins Auge fällt, wenn man das Vergleichsbeispiel mit dem erfindungsgemäß durchgeführten Beispiel 3 vergleicht.

## Patentansprüche

1. Verwendung wenigstens eines von Ammoniumionen im wesentlichen freien Backtriebmittels oder Bestandteils desselben zur Verminderung der Acrylamidkonzentration in Dauerbackwaren gegenüber den Acrylamidkonzentrationen von Dauerbackwaren, die unter den gleichen Bedingungen, aus den gleichen Ausgangsstoffen, aber mit Ammoniumverbindungen als Backtriebmittel erhalten wurden.

2. Verwendung nach Anspruch 1 zur Herstellung von Lebkuchen, Keksen und Plätzchen.

3. Verwendung nach Anspruch 1 von saurem Natriumpyrophosphat und/oder saurem Natriumaluminiumphosphat und/oder Dicalciumphosphat-dihydrat als Bestandteil des Backtriebmittels.

4. Verwendung nach einem der Ansprüche 1 bis 3 von saurem Natriumpyrophosphat und/oder saurem Natriumaluminiumphosphat und/oder Dicalciumphosphat-dihydrat mit verzögerter CO₂-Freisetzung als Bestandteil des Backtriebmittels.

## Claims

1. Use of at least one essentially ammonium ion-free baking raising agent or constituent thereof for reducing the acrylamide concentration in long-life bakery products in comparison with the levels of acrylamide concentration of long-life bakery products which were obtained under the same conditions from the same starting materials but with ammonium compounds as the baking raising agent.

2. Use according to claim 1 for the production of gingerbread, biscuits and cookies.

3. Use according to claim 1 of acid sodium pyrophosphate and/or acid sodium aluminium phosphate and/or dicalcium phosphate dihydrate as a constituent of the baking raising agent.

4. Use according to one of claims 1 to 3 of acid sodium pyrophosphate and/or acid sodium aluminium phosphate and/or dicalcium phosphate dihydrate with delayed CO₂ liberation as a constituent of the baking raising agent.

## Revendications

1. Utilisation d'au moins une levure chimique, essentiellement exempte d'ions ammonium, ou d'au moins un constituant de cette dernière pour diminuer la concentration d'acrylamide dans des produits de boulangerie de longue conservation par rapport à la concentration d'acrylamide dans des produits de boulangerie de longue conservation qui ont été obtenus dans des conditions analogues, à partir des mêmes produits de départ mais avec des composés de l'ammonium en tant que levure chimique.

2. Utilisation selon la revendication 1, pour préparer des pains d'épices, des biscuits et des petits fours secs.

3. Utilisation selon la revendication 1 de pyrophosphate acide de sodium et/ou de phosphate acide de sodium et d'aluminium et/ou de phosphate dicalcique dihydraté en tant que constituant de la levure chimique.

4. Utilisation selon l'une des revendications 1 à 3 de pyrophosphate acide de sodium et/ou de phosphate acide de sodium et d'aluminium et/ou de phosphate dicalcique dihydraté avec libération retardée de CO₂ en tant que constituant de la levure chimique.
